# EUROPEAN PATENT SPECIFICATION

(11) **EP 2 818 390 B1**
(45) Date of publication and mention of the grant of the patent: **17.01.2018**
(21) Application number: 14166153.8
(22) Date of filing: 28.04.2014
(51) Int. Cl.: B62J 17/02

(54) **Saddle-ride type vehicle**
Sattelfahrzeug
Véhicule à monture de selle

(30) Priority: 27.06.2013 JP 2013135111
(43) Date of publication of application: 31.12.2014
(73) Proprietor: Yamaha Hatsudoki Kabushiki Kaisha, Iwata-shi, Shizuoka 438-8501 (JP)
(72) Inventor: Asai, Takayuki, Iwata-shi, Shizuoka 438-8501 (JP); Kitaura, Toshiaki, Iwata-shi, Shizuoka 438-8501 (JP)
(74) Representative: Grünecker Patent- und Rechtsanwälte PartG mbB

(56) References cited:
- EP-A1- 1 958 861
- EP-A1- 2 289 788
- EP-A1- 2 412 562
- EP-A1- 2 463 186
- US-A1- 2007 228 764
- US-A1- 2007 285 272

## Description

The present invention relates to a saddle-ride type vehicle.

A type of saddle-ride type vehicle, which has been well-known so far, includes a front fork, a front cover enclosing the front fork and a footboard disposed rearward of the front cover (see JP H11-303699A). According to such a scooter-type vehicle, a rider is allowed to put his/her feet on the footboard. Hence, the rider can operate the vehicle in a riding position with less physical burden.

Now, in JP H11-303699 A, the front fork has a fork main body, an upper bracket, an under bracket and a steering shaft. The upper end portion of the fork main body is supported by the upper bracket, whereas the middle portion of the fork main body is supported by the under bracket. The upper end portion of the steering shaft is supported by the upper bracket, whereas the lower end portion of the steering shaft is supported by the under bracket.

According to the saddle-ride type vehicle described in JP H11-303699 A, normally required forward visibility can be reliably achieved, but the size of the front cover tends to be increased because of necessity to cover the entirety of the turnable front fork with the front cover. In comparison, reduction in size of the front cover may be demanded for further enhancing forward visibility in some usage scenes or objects of a saddle-ride type vehicle.

Incidentally, JP-A-2010-163879 describes an exemplary method of supporting the upper end portion of the fork main body and the lower end portion of the steering shaft by the under bracket. According to the method, the front cover is only required to enclose the steering shaft. Hence, reduction in size of the front cover can be achieved.

Moreover, prior art document EP 2 289 788 A1 discloses a saddle-ride type vehicle with a head pipe and a front fork including a steering shaft. The steering shaft is turnably supported by the head pipe. A handlebar is supported by an upper end portion of the steering shaft The handlebar has a pair of holding parts. A front wheel is supported by the front fork. A seat is disposed rearward of the head pipe in a back-and-forth direction. A footboard is disposed forward of and lower than the seat A front cover and a leg shield are surrounding the head pipe. A handlebar cover is constituted by a front cover and a rear cover. The handlebar penetrates said rear cover of the handlebar cover. A meter unit is arranged in an opening for meters disposed in the handlebar cover. A lens joined to the upper part of an upper case of meter cases covers the top face of a dial plate. The upper case includes opaque parts bulging out toward the lens, and switch manipulating elements are fitted to the opaque parts. The dial plate is common to multiple instruments, and the display region of the multiple instruments is partitioned by the opaque parts. The switch manipulating elements are intended for manipulating switches on a board positioned lower than the dial plate. The rear flanks of the switch manipulating elements are covered by reverse parts of the opaque parts.

Prior art documents EP 1 958 861 A1 und US 2007/0285272 A1 discloses scooter type vehicles with a meter attached to a front cover and a handle being rotatable with regard to the meter. In particular EP 1 958 861 A1, which is considered as the closest prior art, discloses a scooter type vehicle includes an upper top surface extending in a longitudinal direction of a vehicle to face upwardly of the vehicle. The upper top surface comprises a middle surface positioned centrally in a vehicle width direction, a right surface positioned on the right of the middle surface, a left surface positioned on the left of the middle surface, a right, upper bulged portion, which is formed between the middle surface and the right surface, bulges upwardly of the vehicle, and extends in the longitudinal direction of the vehicle, and a left, upper bulged portion, which is formed between the middle surface and the left surface, bulges upwardly of the vehicle, and extends in the longitudinal direction of the vehicle.

Moreover, a saddle-ride type vehicle described in JP-A-2010-163879 has a structure that a meter unit is attached to the top surface of the front cover. Thus, unlike the structure of attaching the meter unit to the vicinity of the handle, the meter unit does not interfere with the feet of a rider even when the handle is operated. In other words, it is possible to enlarge the space for accommodating the feet of a rider. A more comfortable riding position can be thereby reliably achieved.

In such a saddle-ride type vehicle, reduction in size of the front cover can be achieved by lowering the height of the front cover to which the meter unit is attached.

However, when forward visibility is enhanced by lowering the height of the front cover, the position of the meter unit is accordingly lowered. Therefore, visibility of the meter unit is inevitably degraded.

It is an object of the present invention to provide a saddle-ride type vehicle whereby forward visibility of the vehicle and visibility of a meter can be both enhanced in a comfortable riding position.

According to the present invention said object is solved by a saddle-ride type vehicle having the features of independent claim 1. Preferred embodiments are laid down in the dependent claims.

Accordingly, a saddle-ride type vehicle according to a first aspect of the invention includes a head pipe, a front fork, a handle, a front wheel, a seat, a footboard, a front cover and a meter unit. The front fork includes a steering shaft, a bottom bridge and a fork main body. The steering shaft is turnably supported by the head pipe. The bottom bridge supports a lower end portion of the steering shaft. The upper end portion of the fork main body is supported by the bottom bridge. The handle is supported by an upper end portion of the steering shaft and has a pair of holding parts. The front wheel is supported by a lower end portion of the fork main body. The seat is disposed rearward of the head pipe in a back-and-forth direction. The footboard is disposed forward of and lower than the seat. The front cover includes a front-side cover part, a rear-side cover part and a top-side cover part. The front-side cover part covers a front side and lateral sides of the head pipe. The rear-side cover part covers a rear side of the head pipe and is continued to a rear end portion of the front-side cover part. The top-side cover part covers a top side of the head pipe and is continued to an upper end portion of the front-side cover part and an upper end portion of the rear-side cover part. The a meter unit includes a meter and a translucent cover. The meter is attached to the top-side cover part. The translucent cover covers a top side of the meter and is slanted forward. A rear end of the front-side cover part is located forward of the pair of holding parts in a side view. An upper end of the translucent cover is located higher than the pair of holding parts in the side view. The top-side cover part has a pair of top surfaces. The top surfaces extends in the back-and-forth direction on both sides of the meter unit in a vehicle width direction. The pair of top surfaces is located lower than a center of the translucent cover in an up-and-down direction.

A saddle-ride type vehicle according to a second aspect of the invention relates to the saddle-ride type vehicle according to the first aspect, and wherein a width of the translucent cover in the vehicle width direction is less than one-third of a width of the top-side cover part in the vehicle width direction.

A saddle-ride type vehicle according to a third aspect relates to the saddle-ride type vehicle according to the first or second aspect, and wherein an interval produced between an outer edge of the translucent cover and an outer edge of the top-side cover part in the vehicle width direction is greater than a width of the translucent cover in the vehicle width direction when viewed from a direction perpendicular to the translucent cover. The width of the translucent cover in the vehicle width direction is greater than a length of the translucent cover in the back-and-forth direction when viewed from the direction perpendicular to the translucent cover.

A saddle-ride type vehicle according to a fourth aspect relates to the saddle-ride type vehicle according to any of the first to third aspects, and wherein a width of the translucent cover in the vehicle width direction is less than a width of the front fork in the vehicle width direction.

A saddle-ride type vehicle according to a fifth aspect relates to the saddle-ride type vehicle according to any of the first to fourth aspects, and wherein the translucent cover is configured not to be overlapped with the pair of holding parts when viewed from a direction perpendicular to the translucent cover in a case where the handle is turned at a maximum angle.

A saddle-ride type vehicle according to a sixth aspect relates to the saddle-ride type vehicle according to the fifth aspect, and wherein the translucent cover is configured to be located between the pair of holding parts in the vehicle width direction in the case where the handle is turned at the maximum angle.

A saddle-ride type vehicle according to a seventh aspect relates to the saddle-ride type vehicle according to any of the first to sixth aspects, and wherein each of the pair of top surfaces has a front slope surface and a rear slope surface. The front slope surface is slanted forward and downward. The rear slope surface is slanted rearward and downward and is continued to a rear end portion of the front slope surface.

A saddle-ride type vehicle according to an eighth aspect relates to the saddle-ride type vehicle according to the seventh aspect, and wherein the rear slope surface is located laterally to the translucent cover in the vehicle width direction.

A saddle-ride type vehicle according to a ninth aspect relates to the saddle-ride type vehicle according to the seventh or eighth aspect, and wherein a slant angle of the rear slope surface with respect to a horizontal direction is less than a slant angle of the translucent cover with respect to the horizontal direction.

A saddle-ride type vehicle according to a tenth aspect relates to the saddle-ride type vehicle according to any of the seventh to ninth aspects, and wherein an interval produced between the translucent cover and the rear slope surface in the up-and-down direction is gradually increased forward.

A saddle-ride type vehicle according to an eleventh aspect relates to the saddle-ride type vehicle according to any of the seventh to tenth aspects, and wherein a slant angle of the rear slope surface with respect to a horizontal direction is less than a slant angle of the front slope surface with respect to the horizontal direction.

A saddle-ride type vehicle according to a twelfth aspect relates to the saddle-ride type vehicle according to any of the first to eleventh aspects, and wherein a height of the translucent cover in the up-and-down direction is greater than a depth of the translucent cover in the back-and-forth direction.

A saddle-ride type vehicle according to a thirteenth aspect relates to the saddle-ride type vehicle according to the first to twelfth aspects, and wherein the upper end of the translucent cover is located rearward of a center of the front-side cover part in the back-and-forth direction.

A saddle-ride type vehicle according to a fourteenth aspect relates to the saddle-ride type vehicle according to the first to thirteenth aspects, and wherein the handle is overlapped with the meter unit when viewed from a direction perpendicular to the translucent cover.

A saddle-ride type vehicle according to a fifteenth aspect relates to the saddle-ride type vehicle according to the fourteenth aspect, and wherein the meter unit includes a display part which is configured to display a speed meter and an alarm lamp. The handle is separated away from the display part when viewed from the direction perpendicular to the translucent cover.

### Advantageous Effects

The saddle-ride type vehicle according to the first aspect includes the footboard on which a rider seated on the seat puts his/her feet during travelling. Therefore, the rider can operate the vehicle in a riding position with less physical burden. Further, the front fork includes the bottom bridge for supporting the lower end portion of the steering shaft and the upper end portion of the fork main body. Yet further, the rear end of the front-side cover part is located forward of the pair of holding parts in a side view. Thus, the steering shaft is allowed to be enclosed by the front cover. Therefore, in comparison with a structure that the fork main body is extended to the same height as the steering shaft, the front cover can be further reduced in its size and the riding position of a rider can be moved further forward. As a result, the top-side cover part can be entirely lowered, and forward visibility can be enhanced. Further, the top-side cover part has the pair of top surfaces that are extended in the back-and-forth direction while being located laterally to the translucent cover. The pair of top surfaces is located lower than the center of the translucent cover in the up-and-down direction. Incidentally, as a result of keen examination, the inventors of the present application noticed that different visual ranges are desired by a rider with respect to a situation during travelling in a straight direction and a situation in approaching to an intersection. As a result, the inventors reached a conclusion that forward visibility can be divided into straightly forward visibility and obliquely forward visibility. Further, the inventors especially obtained the finding that required forward visibility can be maintained during riding on a vehicle by expanding a near-side obliquely forward visual range. In view of the above, the pair of top surfaces is formed on the both sides of the meter unit protruded from the top-side cover part in the present saddle-ride type vehicle. Therefore, visibility of the meter can be enhanced, while required forward visibility can be maintained during riding on the vehicle by extending the near-side obliquely forward visual range. As a result, forward visibility of the vehicle and visibility of the meter can be both enhanced while a raider operates the vehicle in a comfortable riding position.

In the saddle-ride type vehicle according to the second aspect, the field of view in the obliquely forward direction is extended. Therefore, forward visibility can be enhanced.

In the saddle-ride type vehicle according to the third aspect, the field of view in the obliquely forward direction is extended, while the translucent cover is formed with a narrow width. Therefore, forward visibility can be further enhanced.

In the saddle-ride type vehicle according to the fourth aspect, the translucent cover is formed with a narrow width. Therefore, forward visibility can be enhanced.

In the saddle-ride type vehicle according to the fifth aspect, the translucent cover is not blocked by the pair of holding parts, for instance, even during turning of the saddle-ride type vehicle. Therefore, visibility of the meter can be further enhanced.

In the saddle-ride type vehicle according to the sixth aspect, the translucent cover is not blocked by the pair of holding parts, for instance, even during turning of the saddle-ride type vehicle. Therefore, visibility of the meter can be further enhanced.

In the saddle-ride type vehicle according to the seventh aspect, the pair of top surfaces is downwardly cut to the forward. The field of view on the near side is herein further extended in comparison with the structure that the pair of top surfaces is flat. Therefore, forward visibility can be further enhanced.

In the saddle-ride type vehicle according to the eighth aspect, the meter unit can be herein located more rearward in comparison with the structure that the translucent cover is located laterally to the front slope surface. In other words, the meter unit can be located closer to a rider. Therefore, visibility of the meter can be further enhanced.

In the saddle-ride type vehicle according to the ninth aspect, the rise of the rear slope surface is suppressed. Therefore, it is possible to inhibit occurrence of such a situation that obliquely forward visibility is degraded by the rear slope surface. Further, the meter unit can be located closer to a rider while being raised. Therefore, visibility of the meter can be further enhanced.

In the saddle-ride type vehicle according to the tenth aspect, the meter unit can be located closer to a rider while being raised. Therefore, visibility of the meter can be further enhanced.

In the saddle-ride type vehicle according to the eleventh aspect, the slant of the rear slope surface can be suppressed. Where the height of the head pipe is set constant, the height of the front end of the rear slope surface can be lowered. Therefore, obliquely forward visibility can be further enhanced.

In the saddle-ride type vehicle according to the twelfth aspect, the meter unit can be located closer to a rider while being raised. Therefore, visibility of the meter can be further enhanced.

In the saddle-ride type vehicle according to the thirteenth aspect, the meter unit is located closer to a rider. Therefore, visibility of the meter can be further enhanced.

In the saddle-ride type vehicle according to the fourteenth aspect, the meter unit is located closer to the handle. Therefore, the meter unit can be located further closer to a rider.

In the saddle-ride type vehicle according to the fifteenth aspect, required visibility of the meter can be reliably achieved, while the meter unit can be located closer to a rider.

### BRIEF DESCRIPTION OF THE DRAWINGS

Referring now to the attached drawings which form a part of this original disclosure:
FIG. 1 is a left side view of a saddle-ride type vehicle according to an exemplary embodiment;
FIG. 2 is a top view of the saddle-ride type vehicle;
FIG. 3 is a plan view of a meter unit;
FIG. 4 is an enlarged left side view of the saddle-ride type vehicle;
FIG. 5 is an enlarged right side view of the saddle-ride type vehicle;
FIG. 6 is a plan view seen in a direction perpendicular to a translucent cover of the saddle-ride type vehicle; and
FIG. 7 is a plan view seen in the direction perpendicular to the translucent cover of the saddle-ride type vehicle.

### DETAILED DESCRIPTION OF THE EMBODIMENTS

### (Schematic Structure of Saddle-Ride Type Vehicle 1)

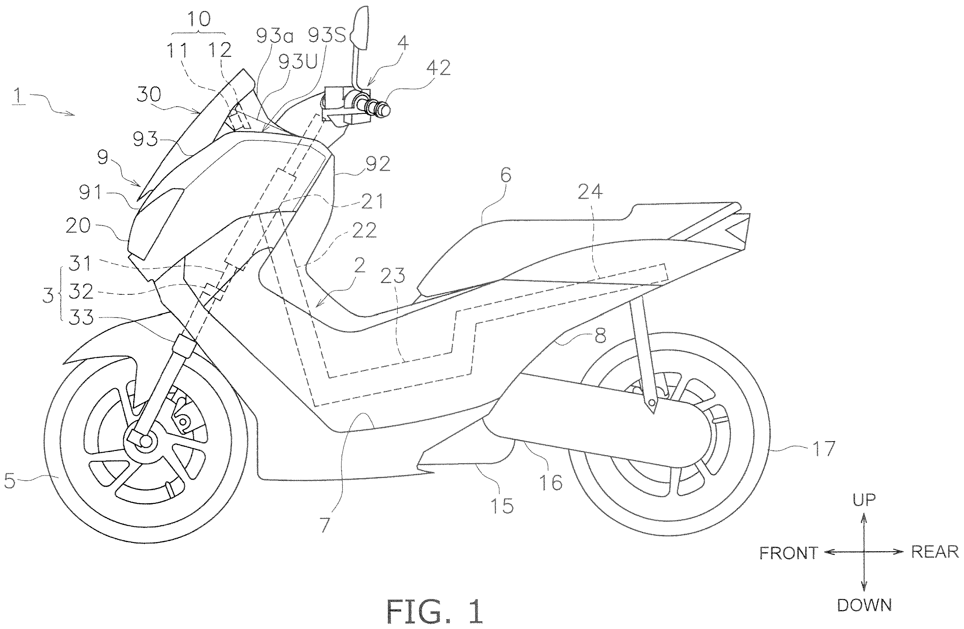

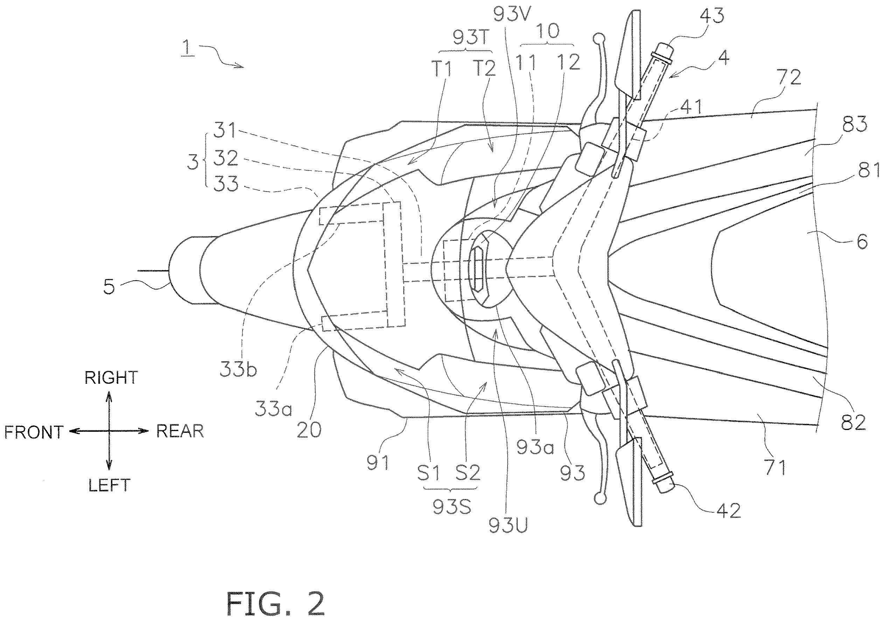

With reference to the attached drawings, explanation will be hereinafter made for a schematic structure of a saddle-ride type vehicle 1 according to an exemplary embodiment. FIG. 1 is a left side view of the saddle-ride type vehicle 1. FIG. 2 is a top view of the saddle-ride type vehicle 1. FIG. 2 illustrates a condition that a handle 4 is not turned right and left (i.e., in a straight position).

The saddle-ride type vehicle 1 includes a vehicle body frame 2, a front fork 3, the handle 4, a front wheel 5, a seat 6, a footboard 7, a center cover 8, a front cover 9, a meter unit 10, an engine 15, a power transmission 16 and a rear wheel 17. It should be noted that in the following explanation, the terms "back-and-forth direction" and "vehicle width direction" respectively refer to a vehicle back-and-forth direction and a right-and-left direction seen from a rider seated on the seat 6.

The vehicle body frame 2 is formed by pipes made of iron. The vehicle body frame 2 may be integrally shaped by means of bending or so forth, or alternatively, may be formed by integrating a plurality of components by means of welding or so forth.

As illustrated in FIG. 1, the vehicle body frame 2 includes a head pipe 21, a down frame 22, an under frame 23 and a rear frame 24. The head pipe 21 is positioned in the middle of the vehicle in the vehicle width direction. The down frame 22 is connected to the head pipe 21. The down frame 22 is downwardly extended from the head pipe 21. The under frame 23 is connected to the lower end portion of the down frame 22. The under frame 23 is backwardly extended from the down frame 22. The rear frame 24 is connected to the rear end portion of the under frame 23. The rear frame 24 is backwardly and upwardly extended from the rear end portion of the under frame 23.

The front fork 3 includes a steering shaft 31, a bottom bridge 32 and a fork main body 33. The steering shaft 31 is inserted into the head pipe 21, while being upwardly extended from the bottom bridge 32. The steering shaft 31 is turnably supported by the head pipe 21. The steering shaft 31 supports the handle 4. The bottom bridge 32 is extended in the vehicle width direction while being located under the head pipe 21. The bottom bridge 32 supports the lower end portion of the steering shaft 31. The bottom bridge 32 supports the upper end portion of the fork main body 33. The fork main body 33 is downwardly extended from the bottom bridge 32. As illustrated in FIG. 2, the fork main body 33 includes a left support member 33a and a right support member 33b. The left and right support members 33a and 33b are disposed on the both sides of the front wheel 5 in the vehicle width direction.

The handle 4 is supported by the upper end portion of the steering shaft 31. The handle 4 is turnable right and left about the steering shaft 31 as an axis. As illustrated in FIG. 2, the handle 4 includes a handle pipe 41, a left grip 42 and a right grip 43.

The handle pipe 41 is coupled to the steering shaft 31. The handle pipe 41 is extended in the vehicle width direction. As illustrated in FIG. 2, the handle pipe 41 is formed such that the middle part thereof in the vehicle width direction is protruded forward. The left grip 42 is attached to the left end portion of the handle pipe 41. The right grip 43 is attached to the right end portion of the handle pipe 41. The right and left grips 43 and 42 compose an exemplary pair of holding parts.

The front wheel 5 is rotatably supported by the lower end portion of the fork main body 33. The front wheel 5 is turned right and left in response to right-and-left turning of the handle 4. The seat 6 is disposed rearward of the head pipe 21. The seat 6 is supported by the rear frame 24.

The footboard 7 is a plate-shaped member on which a rider seated on the seat 6 puts his/her feet during travelling. As illustrated in FIG. 1, the rider is allowed to operate the vehicle in a comfortable position with less physical burden by putting his/her feet on the footboard 7. The footboard 7 is located between the front wheel 5 and the seat 6 in the back-and-forth direction. The footboard 7 is also located between the down frame 22 and the rear frame 24 in the back-and-forth direction. Further, the footboard 7 is located lower than the seat 6. Yet further, the footboard 7 is disposed under the under frame 23. As illustrated in FIG. 2, the footboard 7 has a left footboard part 71 and a right footboard part 72. The right and left footboard parts 72 and 71 are respectively extended in the back-and-forth direction.

The center cover 8 is disposed between the left footboard part 71 and the right footboard part 72 in the vehicle width direction. As illustrated in FIG. 2, the center cover 8 has a center part 81, a left side part 82 and a right side part 83. The center part 81 is extended in the back-and-forth direction while being located between the seat 6 and the front cover 9. The left side part 82 is coupled to the left footboard part 71, while being downwardly extended from the left end portion of the center part 81. The right side part 83 is coupled to the right footboard part 72, while being downwardly extended from the right end portion of the center part 81.

The front cover 9 is disposed under and forward of the handle 4. The front cover 9 encloses the head pipe 21 and the steering shaft 31, while being located higher than the front wheel 5. The front cover 9 has a front-side cover part 91, a rear-side cover part 92 and a top-side cover part 93.

The front-side cover part 91 covers the front side and the lateral sides of the head pipe 21. The front-side cover part 91 has a U-shape in a top view. A headlight 20 is attached to the front surface of the front-side cover part 91.

The rear-side cover part 92 covers the rear side of the head pipe 21. The rear-side cover part 92 is continued to the rear end portion of the front-side cover part 91 and that of the top-side cover part 93. The rear-side cover part 92 is continued to the footboard 7 and the center cover 8, while being downwardly extended from the rear end portion of the top-side cover part 93.

The top-side cover part 93 covers the top side of the head pipe 21. The top-side cover part 93 is continued to the upper end portion of the front-side cover part 91 and that of the rear-side cover part 92. The top-side cover part 93 has a meter cover part 93a for covering the top side and the lateral sides of the meter unit 10. The meter cover part 93a is located in the middle of the vehicle in the vehicle width direction. The meter cover part 93a is formed so as to be protruded from the top surface of the top-side cover part 93. The meter cover part 93a is tapered forward. A screen 30 is attached to the top-side cover part 93.

The top-side cover part 93 herein has a left-side top surface 93S, a right-side top surface 93T, a left-side intermediate surface 93U and a right-side intermediate surface 93V. The right-side and left-side top surfaces 93T and 93S compose an exemplary pair of top surfaces.

The left-side top surface 93S is extended in the back-and-forth direction, while being located on the left side of the meter unit 10. As illustrated in FIG. 2, the left-side top surface 93S has a left-side front slope surface S1 and a left-side rear slope surface S2. The left-side front slope surface S1 is slanted forward and downward, whereas the left-side rear slope surface S2 is slanted rearward and downward. The left-side rear slope surface S2 is continued to the rear end portion of the left-side front slope surface S1. The left-side front slope surface S1 is an exemplary front slope surface, whereas the left-side rear slope surface S2 is an exemplary rear slope surface.

The right-side top surface 93T is extended in the back-and-forth direction, while being located on the right side of the meter unit 10. As illustrated in FIG. 2, the right-side top surface 93T has a right-side front slope surface T1 and a right-side rear slope surface T2. The right-side front slope surface T1 is slanted forward and downward, whereas the right-side rear slope surface T2 is slanted rearward and downward. The right-side rear slope surface T2 is continued to the rear end portion of the right-side front slope surface T1. The right-side front slope surface T1 is an exemplary front slope surface, whereas the right-side rear slope surface T2 is an exemplary rear slope surface.

As illustrated in FIG. 1, the left-side intermediate surface 93U is located higher than the left-side top surface 93S, while being located lower than the meter cover part 93a. As illustrated in FIG. 2, the left-side intermediate surface 93U is located between the left-side top surface 93S and the meter cover part 93a in the vehicle width direction. The left-side intermediate surface 93U is tapered forward. The left-side intermediate surface 93U is formed along the left outer edge of the meter cover part 93a. Therefore, the left-side intermediate surface 93U is curved to be gradually closer to the middle of the vehicle to the forward.

The right-side intermediate surface 93V is located higher than the right-side top surface 93T, while being located lower than the meter cover part 93a. As illustrated in FIG. 2, the right-side intermediate surface 93V is located between the right-side top surface 93T and the meter cover part 93a in the vehicle width direction. The right-side intermediate surface 93V is tapered forward. The right-side intermediate surface 93V is formed along the right outer edge of the meter cover part 93a. Therefore, the right-side intermediate surface 93V is curved to be gradually closer to the middle of the vehicle to the forward.

The meter unit 10 is disposed inside the meter cover part 93a. The meter unit 10 includes a meter 11 and a translucent cover 12. The meter 11 is attached to the top-side cover part 93. The translucent cover 12 covers the top side of the meter 11. The translucent cover 12 is a protection member for preventing intrusion of dust and moisture into the meter 11. The translucent cover 12 is made of translucent material such as plastic or glass. When seated on the seat 6, a rider can visually check the meter 11 through the translucent cover 12. The upper end of the translucent cover 12 is located forward of the lower end thereof. In other words, the translucent cover 12 is slanted forward. The translucent cover 12 can be formed in a flat-plate shape. Alternatively, the translucent cover 12 may be partially or entirely curved.

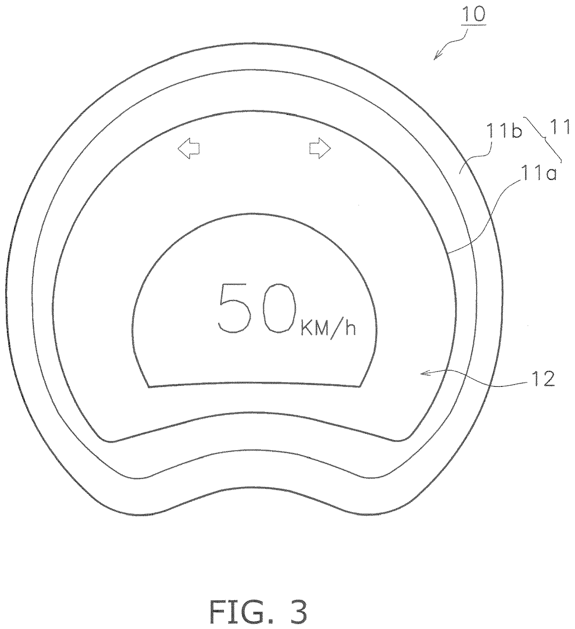

FIG. 3 is herein a plan view of a structure of the meter unit 10. As illustrated in FIG. 3, the meter 11 includes a display part 11a and an outer shell part 11b. The display part 11a is configured to display a speed meter, a variety of alarm lamps and so forth. The translucent cover 12 is disposed on the display part 11a. The outer shell part 11b encloses the outer circumference of the display part 11a. The outer shell part 11b restricts incident light into the display part 11a in order to enhance visibility of the display part 11a.

The engine 15 is an internal combustion engine configured to generate driving force. The driving force, generated by the engine 15, is transmitted to the rear wheel 17 through the power transmission 16.

### (Positional Relations among Respective Elements in Side View)

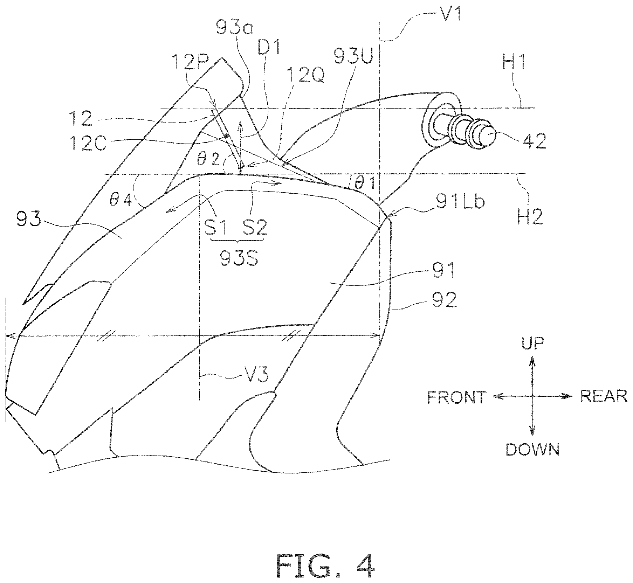

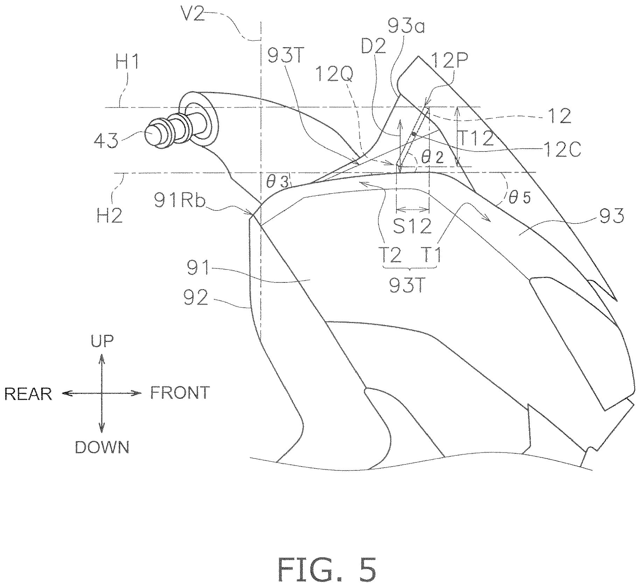

Next, with reference to the drawings, explanation will be made for positional relations among respective elements in a side view. FIG. 4 is an enlarged left side view of the saddle-ride type vehicle 1. FIG. 5 is an enlarged right side view of the saddle-ride type vehicle 1. FIGS. 4 and 5 illustrate a condition that the handle 4 is not being turned right and left.

A left rear end 91 Lb of the front-side cover part 91 is located forward of the left grip 42. Therefore, the left grip 42 is located rearward of a vertical line V1 for indicating the back-and-forth position of the left rear end 91 Lb. The left rear end 91 Lb is formed on the upper part of the front cover 9. More specifically, as illustrated in FIG. 4, the left rear end 91 Lb is located on the upper end of a joint line between the front-side cover part 91 and the rear-side cover part 92. Likewise, a right rear end 91 Rb of the front-side cover part 91 is located forward of the right grip 43. Therefore, the right grip 43 is located rearward of a vertical line V2 for indicating the back-and-forth position of the right rear end 91 Rb. The right rear end 91 Rb is formed on the upper part of the front cover 9. More specifically, as illustrated in FIG. 5, the right rear end 91 Rb is located on the upper end of the joint line between the front-side cover part 91 and the rear-side cover part 92. It should be noted that in the present exemplary embodiment, the back-and-forth position of the vertical line V1 is the same as that of and the vertical line V2.

An upper end 12P of the translucent cover 12 is located higher than the left grip 42. Therefore, the left grip 42 is located lower than a horizontal line H1 for indicating the up-and-down position of the upper end 12P Likewise, the upper end 12P of the translucent cover 12 is located higher than the right grip 43. Therefore, the right grip 43 is located lower than the horizontal line H1.

The upper end 12P of the translucent cover 12 is located forward of a lower end 12Q of the translucent cover 12. As illustrated in FIG. 4, the lower end 12Q of the translucent cover 12 is located rearward of a vertical line V3 for indicating the center of the front-side cover part 91 in the back-and-forth direction. In the present exemplary embodiment, the upper end 12P of the translucent cover 12 is also located rearward of the vertical line V3.

The left-side top surface 93S is located lower than a center 12C of the translucent cover 12 in the up-and-down direction. Likewise, the right-side top surface 93T is located lower than the center 12C. Further, in the present exemplary embodiment, the right-side and left-side top surfaces 93T and 93S are located lower than the lower end 12Q of the translucent cover 12.

The left-side rear slope surface S2 of the left-side top surface 93S is located leftward of the translucent cover 12. Likewise, the right-side rear slope surface T2 of the right-side top surface 93T is located rightward of the translucent cover 12.

The translucent cover 12 is further slanted with respect to the horizontal direction than the left-side rear slope surface S2 is. Therefore, a slant angle θ1 of the left-side rear slope surface S2 with respect to a horizontal line H2 is less than a slant angle θ2 of the translucent cover 12 with respect to the horizontal line H2. Likewise, the translucent cover 12 is further slanted with respect to the horizontal direction than the right-side rear slope surface T2 is. Therefore, a slant angle θ3 of the right-side rear slope surface T2 with respect to the horizontal line H2 is less than the slant angle θ2 of the translucent cover 12 with respect to the horizontal line H2.

As illustrated in FIG. 5, a height T12 of the translucent cover 12 in the up-and-down direction is herein greater than a depth S12 of the translucent cover 12 in the back-and-forth direction. Therefore, the slant angle θ2 of the translucent cover 12 with respect to the horizontal line H2 is greater than 45 degrees.

The left-side front slope surface S1 is further slanted with respect to the horizontal direction than the left-side rear slope surface S2 is. In other words, the slant angle θ1 of the left-side rear slope surface S2 with respect to the horizontal line H2 is less than a slant angle θ4 of the left-side front slope surface S1 with respect to the horizontal line H2. Likewise, the right-side front slope surface T1 is further slanted with respect to the horizontal direction than the right-side rear slope surface T2 is. In other words, the slant angle θ3 of the right-side rear slope surface T2 with respect to the horizontal line H2 is less than a slant angle θ5 of the right-side front slope surface T1 with respect to the horizontal line H2. The right-side and left-side rear slope surfaces T2 and S2 may be arranged roughly in parallel to a horizontal plane. In other words, the slant angle θ1 of the left-side rear slope surface S2 and the slant angle θ3 of the right-side rear slope surface T2 may be roughly 0 degrees.

An interval D1 produced between the translucent cover 12 and the left-side rear slope surface S2 in the up-and-down direction is gradually increased forward. Likewise, an interval D2 produced between the translucent cover 12 and the right-side rear slope surface T2 in the up-and-down direction is gradually increased forward. In the present exemplary embodiment, the intervals D1 and D2 are roughly equal to each other.

### (Positional Relations among Respective Elements in Plan View)

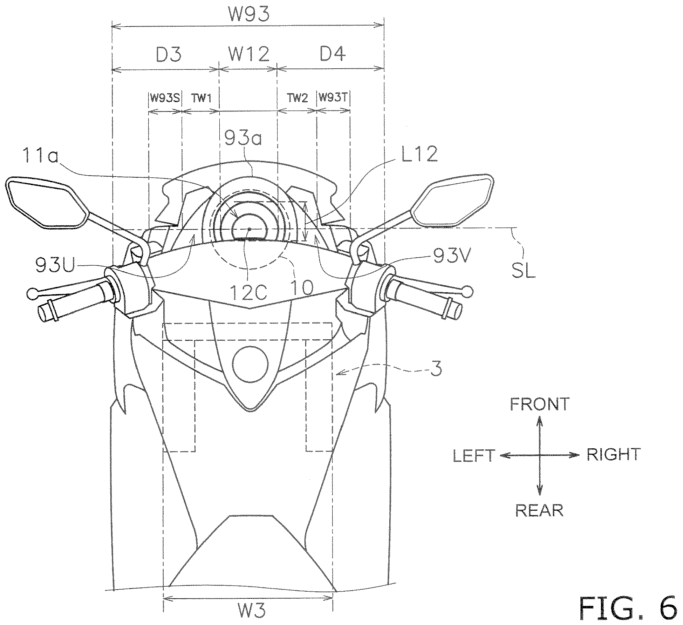

Next, with reference to the drawings, explanation will be made for positional relations among respective elements in a plan view. FIG. 6 is a plan view of the saddle-ride type vehicle 1 seen in a direction perpendicular to the translucent cover 12. The point of view in FIG. 6 can be considered as a line of sight of a rider seated on the seat 6. FIG. 6 illustrates a condition that the handle 4 is not being turned right and left.

In the vehicle width direction, the width (W12) of the translucent cover 12 is less than one-third of the width (W93) of the top-side cover part 93.

In the vehicle width direction, the interval (D3) produced between the left end of the translucent cover 12 and that of the top-side cover part 93 is greater than the width W12 of the translucent cover 12. Likewise, in the vehicle width direction, the interval (D4) produced between the right end of the translucent cover 12 and that of the top-side cover part 93 is greater than the width W12 of the translucent cover 12. In the present exemplary embodiment, the intervals D3 and D4 are roughly equivalent to each other. It should be noted that the right/left end of the translucent cover 12 is an exemplary outer edge of the translucent cover 12, whereas the right/left end of the top-side cover part 93 is an exemplary outer edge of the top-side cover part 93.

In the view of the direction perpendicular to the translucent cover 12, the width W12 of the translucent cover 12 is greater than the length (L12) of the translucent cover 12 in the back-and-forth direction.

In the view of the direction perpendicular to the translucent cover 12, the total width (TW1) of the left-side intermediate surface 93U and the meter cover part 93a is less than the width W12 of the translucent cover 12 on a reference line SL arranged in parallel to a right-and-left direction passing through the center 12C of the translucent cover 12. Further, the total width TW1 of the left-side intermediate surface 93U and the meter cover part 93a is less than the width (W93S) of the left-side top surface 93S on the reference line SL.

Likewise, in the view of the direction perpendicular to the translucent cover 12, the total width (TW2) of the right-side intermediate surface 93V and the meter cover part 93a is less than the width W12 of the translucent cover 12 on the reference line SL. Further, the total width TW2 of the right-side intermediate surface 93V and the meter cover part 93a is less than the width (W93T) of the right-side top surface 93T on the reference line SL.

In the vehicle width direction, the width W12 of the translucent cover 12 is less than the width (W3) of the front fork 3. Specifically, the width W3 of the front fork 3 is either the width of the bottom bridge 32 or that of the fork main body 33.

The handle 4 is overlapped with the meter unit 10. It should be noted that the handle 4 is separated away from the display part 11a of the meter unit 10. In other words, the handle 4 is not overlapped with the display part 11a.

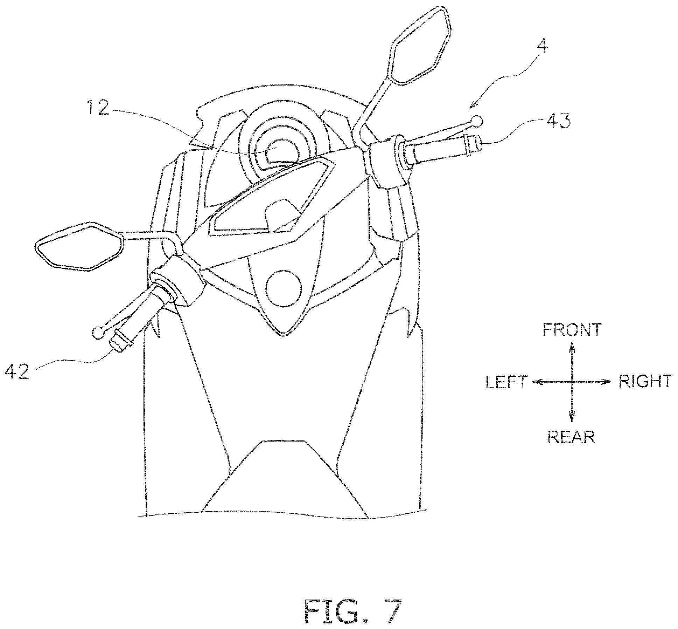

FIG. 7 is herein a plan view that is basically the same as FIG. 6. However, FIG. 7 illustrates a condition that the handle 4 is turned at the maximum angle in the counterclockwise direction.

The translucent cover 12 is not overlapped with the right grip 43 and the left grip 42. Especially, the translucent cover 12 is not overlapped with the left grip 42 inwardly moved in the vehicle width direction in accordance with turning of the handle 4. The translucent cover 12 is disposed between the right grip 43 and the left grip 42 in the vehicle width direction. The structure and configuration herein described are also true to a condition that the handle 4 is turned at the maximum angle in the clockwise direction.

### (Actions and Effects)

(1) The saddle-ride type vehicle 1 includes the footboard 7 on which a rider seated on the seat 6 puts his/her feet during travelling. Therefore, the rider can operate the vehicle in a riding position with less physical burden.
   Further, the front fork 3 includes the bottom bridge 32 for supporting the lower end portion of the steering shaft 31 and the upper end portion of the fork main body 33. Further, the right and left rear ends 91 Rb and 91 Lb of the front-side cover part 91 are located forward of the right and left grips 43 and 42 in a side view. Thus, the steering shaft 31 is allowed to be enclosed by the front cover 9. Therefore, in comparison with the structure that the fork main body 33 is extended to the same height as the steering shaft 31, the front cover 9 can be further reduced in its size and the riding position of a rider can be moved further forward. As a result, the top-side cover part 93 can be entirely lowered, and forward visibility can be enhanced.
   Further, the top-side cover part 93 has the right-side top surface 93T and the left-side top surface 93S (an exemplary pair of top surfaces) that are extended in the back-and-forth direction while being located laterally to the translucent cover 12. The right-side and left-side top surfaces 93T and 93S are located lower than the center 12C of the translucent cover 12 in the up-and-down direction.
   Incidentally, as a result of keen examination, the inventors of the present application noticed that different visual ranges are desired by a rider with respect to a situation during travelling in a straight direction and a situation in approaching to an intersection. Meanwhile, the inventors reached a conclusion that forward visibility can be divided into straightly forward visibility and obliquely forward visibility. Further, the inventors especially obtained the finding that required forward visibility can be maintained during riding on a vehicle by expanding a near-side obliquely forward visual range.
   Detailed explanation will be hereinafter made for the mechanism. First, the travelling direction of a vehicle is not changed during travelling in a straight direction. Hence, forward visibility is less affected by the fact that the road surface straight ahead is not visible on the near side of a rider. In other words, forward visibility is unlikely to be degraded even when the height of the vehicle is high in its middle part in the vehicle width direction. By contrast, the travelling direction of the vehicle is changed into right or left in approaching to an intersection. Hence, forward visibility is greatly affected by the fact that the near-side obliquely forward visual range is narrow. In other words, forward visibility is remarkably degraded when the height of the vehicle is high on its both sides in the vehicle width direction. Thus, it is important for enhancement in forward visibility to expand the near-side obliquely forward visual range rather than the visual range on the straight ahead road surface side.
   In view of the above, the right-side top surface 93T and the left-side top surface 93S are formed on the both sides of the meter unit 10 protruded from the top-side cover part 93 in the saddle-ride type vehicle 1 according to the present exemplary embodiment. Therefore, visibility of the meter 11 can be enhanced, while required forward visibility can be maintained by expanding the near-side obliquely forward visual range.
   As described above, according to the saddle-ride type vehicle 1 of the present exemplary embodiment, forward visibility of the vehicle and visibility of the meter 11 can be both enhanced while a raider operates the vehicle in a comfortable riding position.
(2) In the vehicle width direction, the width W12 of the translucent cover 12 is less than one-third of the width W93 of the top-side cover part 93. Thus, the field of view in the obliquely forward direction is extended. Therefore, forward visibility can be enhanced.
(3) The interval D3 produced between the left end of the translucent cover 12 and that of the top-side cover part 93 is greater than the width W12 of the translucent cover 12. Further, in the view of the direction perpendicular to the translucent cover 12, the width W12 of the translucent cover 12 is greater than the length L12 of the translucent cover 12 in the back-and-forth direction. Thus, the field of view in the obliquely forward direction is extended, while the translucent cover 12 is formed with a narrow width. Therefore, forward visibility can be further enhanced.
(4) In the vehicle width direction, the width W12 of the translucent cover 12 is less than the width W3 of the front fork 3. Thus, the translucent cover 12 is formed with a narrow width. Therefore, forward visibility can be enhanced.
(5) When the handle 4 is turned at the maxim angle in the clockwise/counterclockwise direction, the translucent cover 12 is not overlapped with the right and left grips 43 and 42 in the view of the direction perpendicular to the translucent cover 12. Thus, the translucent cover 12 is not blocked by the right and left grips 43 and 42, for instance, even during turning of the saddle-ride type vehicle 1. Therefore, visibility of the meter 11 can be further enhanced. Further, the translucent cover 12 is formed with a narrow width. Therefore, forward visibility can be enhanced.
(6) When the handle 4 is turned at the maximum angle in the clockwise/counterclockwise direction, the translucent cover 12 is disposed between the right grip 43 and the left grip 42 in the vehicle width direction. Thus, the translucent cover 12 is not blocked by the right and left grips 43 and 42, for instance, even during turning of the saddle-ride type vehicle 1. Therefore, visibility of the meter 11 can be further enhanced.
(7) The left-side top surface 93S has the left-side front slope surface S1 slanted forward and downward and the left-side rear slope surface S2 slanted rearward and downward. Likewise, the right-side top surface 93T has the right-side front slope surface T1 slanted forward and downward and the right-side rear slope surface T2 slanted rearward and downward. Thus, the right-side and left-side top surfaces 93T and 93S are downwardly cut to the forward. The field of view on the near side is herein further extended in comparison with the structure that the right-side and left-side top surfaces 93T and 93S are flat. Therefore, forward visibility can be further enhanced.
(8) The left-side rear slope surface S2 of the left-side top surface 93S is located leftward of the translucent cover 12. On the other hand, the right-side rear slope surface T2 of the right-side top surface 93T is located rightward of the translucent cover 12. Thus, the meter unit 10 can be herein located more rearward in comparison with the structure that the translucent cover 12 is located laterally to the right-side front slope surface T1 and the left-side front slope surface S1. In other words, the meter unit 10 can be located closer to a rider. Therefore, visibility of the meter 11 can be further enhanced.
(9) The slant angle θ1 of the left-side rear slope surface S2 with respect to the horizontal line H2 is less than the slant angle θ2 of the translucent cover 12 with respect to the horizontal line H2. Likewise, the slant angle θ3 of the right-side rear slope surface T2 with respect to the horizontal line H2 is less than the slant angle θ2 of the translucent cover 12 with respect to the horizontal line H2. Thus, the rise of the left-side rear slope surface S2 and that of the right-side rear slope surface T2 are suppressed. Therefore, it is possible to inhibit occurrence of such a situation that obliquely forward visibility is degraded by the right-side and left-side rear slope surfaces T2 and S2. Further, the meter unit 10 can be located closer to a rider while being raised. Therefore, visibility of the meter 11 can be further enhanced. Consequently, forward visibility can be enhanced, while visibility of the meter 11 can be further enhanced.
(10) The interval D1 produced between the translucent cover 12 and the left-side rear slope surface S2 in the up-and-down direction is gradually increased forward. Likewise, the interval D2 produced between the translucent cover 12 and the right-side rear slope surface T2 in the up-and-down direction is gradually increased forward. Thus, the meter unit 10 can be located closer to a rider while being raised. Therefore, visibility of the meter 11 can be further enhanced.
(11) The slant angle θ1 of the left-side rear slope surface S2 with respect to the horizontal line H2 is less than the slant angle θ4 of the left-side front slope surface S1 with respect to the horizontal line H2. Likewise, the slant angle θ3 of the right-side rear slope surface T2 with respect to the horizontal line H2 is less than the slant angle θ5 of the right-side front slope surface T1 with respect to the horizontal line H2. Thus, the slant of the left-side rear slope surface S2 and that of the right-side rear slope surface T2 can be suppressed. Where the height of the head pipe 21 is set constant, the height of the front end of the left-side rear slope surface S2 and that of the front end of the right-side rear slope surface T2 can be lowered. Therefore, obliquely forward visibility can be further enhanced.
(12) The height T12 of the translucent cover 12 in the up-and-down direction is greater than the depth S12 of the translucent cover 12 in the back-and-forth direction. Thus, the meter unit 10 can be located closer to a rider while being raised. Therefore, visibility of the meter 11 can be further enhanced.
(13) The lower end 12Q of the translucent cover 12 is located rearward of the vertical line V3 that indicates the center of the front-side cover part 91 in the back-and-forth direction. Thus, the meter unit 10 is located closer to a rider. Therefore, visibility of the meter 11 can be further enhanced.
(14) In the view of the direction perpendicular to the translucent cover 12, the handle 4 is overlapped with the meter unit 10. Thus, the meter unit 10 is located closer to the handle 4. Therefore, the meter unit 10 can be located further closer to a rider.
(15) In the view of the direction perpendicular to the translucent cover 12, the handle 4 is separated away from the display part 11a of the meter unit 10. Therefore, required visibility of the meter 11 can be reliably achieved, while the meter unit 10 can be located closer to a rider.

### (Other Exemplary Embodiments)

(A) In the aforementioned exemplary embodiment, the right-side top surface 93T and the left-side top surface 93S are designed to be located lower than the lower end 12Q of the translucent cover 12. However, the structure of the right-side top surface 93T and that of the left-side top surface 93S are not limited to the above. The right-side and left-side top surfaces 93T and 93S may be located either at the same height as or higher than the lower end 12Q of the translucent cover 12.
(B) In the aforementioned exemplary embodiment, the right-side rear slope surface T2 and the left-side rear slope surface S2 are designed to be slanted rearward and downward. However, the right-side and left-side rear slope surfaces T2 and S2 may be only slightly slanted. In other words, the slant angle θ1 and the slant angle θ3 may be roughly 0 degrees.
(C) In the aforementioned exemplary embodiment, the right-side top surface 93T and the left-side top surface 93S of the top-side cover part 93 are designed to be symmetrically formed with reference to the vehicle center line in the vehicle width direction. However, the structure of the right-side top surface 93T and that of the left-side top surface 93S are not limited to the above. The right-side top surface 93T and the left-side top surface 93S may be formed in entirely or partially different shapes.
(D) In the aforementioned exemplary embodiment, the footboard 7 is designed to be divided into the left footboard part 71 and the right footboard part 72. However, the structure of the footboard 7 is not limited to the above. The footboard 7 may be made in the form of a single plate-shaped member obtained by coupling the left footboard part 71 and the right footboard part 72. In this structure, the saddle-ride type vehicle 1 may not be equipped with the center cover 8.

### Industrial Applicability

According to the present teaching, forward visibility of a vehicle and visibility of a meter can be enhanced in a comfortable riding position. Hence, the present teaching is useful for the field of saddle-ride type vehicles.

### Reference Signs List

1 Saddle-ride type vehicle....2 Vehicle body frame....21 Head pipe....3 Front fork....31 Steering shaft....32 Under bracket....33 Fork main body....4 Handle....42 Left grip....43 Right grip....7 Footboard....9 Front cover....91 Front-side cover part....92 Rear-side cover part....93 Top-side cover part....93S Left-side top surface....S1 Left-side front slope surface....S2 Left-side rear slope surface....93T Right-side top surface....T1 Right-side front slope surface....T2 Right-side rear slope surfaces....10 Meter unit....11 Meter....11a Display part....12 Translucent cover

## Claims

1. A saddle-ride type vehicle comprising:
a head pipe (21);
a front fork (3) including a steering shaft (31), a bottom bridge (32) and a fork main body (33), the steering shaft (31) being turnably supported by the head pipe (21), the bottom bridge (32) supporting a lower end portion of the steering shaft (31), an upper end portion of the fork main body (33) being supported by the bottom bridge (32);
a handle (4) being supported by an upper end portion of the steering shaft (31), the handle (4) having a pair of holding parts (42,43);
a front wheel (5) being supported by a lower end portion of the fork main body (33);
a seat (6) being disposed rearward of the head pipe (21) in a back-and-forth direction; a footboard (7) being disposed forward of and lower than the seat (6);
a front cover (9) including a front-side cover part (91), a rear-side cover part (92) and a top-side cover part (93), the front-side cover part (91) covering a front side and lateral sides of the head pipe (21), the rear-side cover part (92) covering a rear side of the head pipe (21) and being continued to a rear end portion of the front-side cover part (91), the top-side cover part (93) covering a top side of the head pipe (21) and being continued to an upper end portion of the front-side cover part (91) and an upper end portion of the rear-side cover part (92); and
a meter unit (10) including a meter (11) and a translucent cover (12), the meter (11) being attached to the top-side cover part (93), the translucent cover (12) covering a top side of the meter (11) and being slanted forward, the handle (4) is rotatable relative to the meter unit (10),
a rear end of the front-side cover part (91) being located forward of the pair of holding parts (42,43) in a side view,
an upper end of the translucent cover (12) being located higher than the pair of holding parts (42,43) in the side view,
the top-side cover part (93) having a pair of top surfaces (93S,93T), the top surfaces (93S,93T) extending in the back-and-forth direction on both sides of the meter unit (10) in a vehicle width direction, and
the pair of top surfaces (93S,93T) being located lower than a center of the translucent cover (12) in an up-and-down direction, **characterised in that** a width of the translucent cover (12) in the vehicle width direction is less than one-third of a width of the top-side cover part (93) in the vehicle width direction.

2. A saddle-ride type vehicle according to claim 1, wherein an interval produced between an outer edge of the translucent cover (12) and an outer edge of the top-side cover part (93) in the vehicle width direction is greater than a width of the translucent cover (12) in the vehicle width direction when viewed from a direction perpendicular to the translucent cover (12), and
the width of the translucent cover (12) in the vehicle width direction is greater than a length of the translucent cover (12) in the back-and-forth direction when viewed from the direction perpendicular to the translucent cover (12).

3. A saddle-ride type vehicle according to claim 1 or 2, wherein a width of the translucent cover (12) in the vehicle width direction is less than a width of the front fork (3) in the vehicle width direction.

4. A saddle-ride type vehicle according to any of claims 1 to 3, wherein the translucent cover (12) is configured not to be overlapped with the pair of holding parts (42,43) when viewed from a direction perpendicular to the translucent cover (12) in a case where the handle (4) is turned at a maximum angle.

5. A saddle-ride type vehicle according to claim 4, wherein the translucent cover (12) is configured to be located between the pair of holding parts (42,43) in the vehicle width direction in the case where the handle (4) is turned at the maximum angle.

6. A saddle-ride type vehicle according to any of claims 1 to 5, wherein each of the pair of top surfaces (93S,93T) has a front slope surface (S1,T1) and a rear slope surface (S2,T2), the front slope surface (S1,T1) being slanted forward and downward, the rear slope surface (S2,T2) being slanted rearward and downward and being continued to a rear end portion of the front slope surface (S1,T1).

7. A saddle-ride type vehicle according to claim 6, wherein the rear slope surface (S2,T2) is located laterally to the translucent cover (12) in the vehicle width direction.

8. A saddle-ride type vehicle according to claim 6 or 7, wherein a slant angle (θ1,θ3) of the rear slope surface (S2,T2) with respect to a horizontal direction (H2) is less than a slant angle (θ2) of the translucent cover (12) with respect to the horizontal direction (H2).

9. A saddle-ride type vehicle according to any of claims 6 to 8, wherein an interval produced between the translucent cover (12) and the rear slope surface (S2,T2) in the up-and-down direction is gradually increased forward.

10. A saddle-ride type vehicle according to any of claims 6 to 9, wherein a slant angle (θ1,θ3) of the rear slope surface (S2,T2) with respect to a horizontal direction (H2) is less than a slant angle (θ4,θ5) of the front slope surface (S1,T1) with respect to the horizontal direction (H2).

11. A saddle-ride type vehicle according to any of claims 1 to 10, wherein a height of the translucent cover (12) in the up-and-down direction is greater than a depth of the translucent cover (12) in the back-and-forth direction.

12. A saddle-ride type vehicle according to any of claims 1 to 11, wherein the upper end of the translucent cover (12) is located rearward of a center of the front-side cover part (91) in the back-and-forth direction.

13. A saddle-ride type vehicle according to any of claims 1 to 12, wherein the handle (4) is overlapped with the meter unit (10) when viewed from a direction perpendicular to the translucent cover (12).

14. A saddle-ride type vehicle according to claim 13, wherein the meter unit (10) includes a display part (11a) which is configured to display a speed meter and an alarm lamp, and the handle (4) is separated away from the display part (11a) when viewed from the direction perpendicular to the translucent cover (12).

## Patentansprüche

1. Ein Sattel-Reit-Typ-Fahrzeug, das umfasst:
ein Kopf-Rohr (21);
eine Vorder-Gabel (3), welche eine Lenkwelle (31), eine untere Brücke (32) und einen Gabel-Hauptkörper (33) beinhaltet, die Lenkwelle (31) ist durch das Kopf-Rohr (21) schwenkbar gelagert, die untere Brücke (32) lagert einen unteren Endabschnitt der Lenkwelle (31), ein oberer Endabschnitt des Gabel-Hauptkörpers (33) ist durch die untere Brücke (32) gelagert;
eine Lenk-Stange (4), welche durch einen oberen Endabschnitt der Lenkwelle (31) gelagert ist, die Lenk-Stange (4) hat ein Paar von Halte-Teilen (42, 43);
ein Vorderrad (5), welches durch einen unteren Endabschnitt des Gabel-Hauptkörpers (33) gelagert ist;
einen Sitz (6), der hinter dem Kopf-Rohr (21) in einer Rück-und-Vorwärts-Richtung positioniert ist;
ein Fuß-Brett (7), das vorwärts und niedriger als der Sitz (6) positioniert ist;
eine vordere Abdeckung (9), welche einen Vorder-Seiten-Abdeckteil (91), einen Rück-Seiten-Abdeckteil (92) und einen Ober-Seiten-Abdeckteil (93) beinhaltet, der Vorder-Seiten-Abdeckteil (91) deckt eine Vorder-Seite und Lateral-Seiten des Kopf-Rohr (21) ab, der Rück-Seiten-Abdeckteil (92) deckt eine Rück-Seite des Kopf-Rohrs (21) ab und ist kontinuierlich zu einem hinteren Endabschnitt des Vorder-Seiten-Abdeckteils (91), der Ober-Seiten-Abdeckteil (93) deckt eine Ober-Seite des Kopf-Rohrs (21) ab und ist kontinuierlich mit einem oberen Endabschnitt des Vorder-Seiten-Abdeckteils (91) und einem unteren Endabschnitt des Rück-Seiten-Abdeckteils (92); und
eine Anzeigeeinheit (10), welche eine Anzeige (11) und eine transparente Abdeckung (12) beinhaltet, die Anzeige (11) ist an dem Ober-Seiten-Abdeckteil (93) angebracht, die transparente Abdeckung (12) deckt eine Ober-Seite der Anzeige (11) ab und ist nach vorne geneigt, die Lenk-Stange (4) ist relativ drehbar zu der Anzeigeeinheit (10),
ein hinteres Ende des Vorder-Seiten-Abdeckteils (91) ist vor dem Paar von Halte-Teilen (42, 43) in einer Seiten-Ansicht angeordnet,
ein oberes Ende der transparenten Abdeckung (12) ist höher als das Paar von Halte-Teilen (42, 43) in der Seiten-Ansicht angeordnet,
der Ober-Seiten-Abdeckteil (93) hat ein Paar von oberen Flächen (93S, 93T), die oberen Flächen (93S, 93T) erstrecken sich in der Rück-und-Vorwärts-Richtung an beiden Seiten der Anzeigeeinheit (10) in einer Fahrzeug-Breiten-Richtung, und
das Paar von oberen Flächen (93S, 93T) ist niedriger angeordnet als eine Mitte der transparenten Abdeckung (12) in einer Oben-und-Unten-Richtung, **dadurch gekennzeichnet, dass** eine Breite der transparenten Abdeckung (12) in der Fahrzeug-Breiten-Richtung weniger als ein Drittel einer Breite des Ober-Seiten-Abdeckteils (93) in der Fahrzeug-Breiten-Richtung ist.

2. Ein Sattel-Reit-Typ-Fahrzeug gemäß Anspruch 1, wobei ein Intervall, erzeugt zwischen einer äußeren Kante der transparenten Abdeckung (12) und einer äußeren Kante des Ober-Seiten-Abdeckteils (93) in der Fahrzeug-Breiten-Richtung, größer ist als eine Breite der transparenten Abdeckung (12) in der Fahrzeug-Breiten-Richtung, wenn betrachtet von einer Richtung senkrecht zu der transparenten Abdeckung (12), und
die Breite der transparenten Abdeckung (12) in der Fahrzeug-Breiten-Richtung größer ist als eine Länge der transparenten Abdeckung (12) in der Rück-und-Vorwärts-Richtung, wenn betrachtet von der Richtung senkrecht zu der transparenten Abdeckung (12).

3. Ein Sattel-Reit-Typ-Fahrzeug gemäß Anspruch 1 oder 2, wobei eine Breite der transparenten Abdeckung (12) in der Fahrzeug-Breiten-Richtung kleiner ist als eine Breite der Vorder-Gabel (3) in der Fahrzeug-Breiten-Richtung.

4. Ein Sattel-Reit-Typ-Fahrzeug gemäß irgendeinem der Ansprüche 1 bis 3, wobei die transparente Abdeckung (12) konfiguriert ist, um nicht mit dem Paar von Halte-Teilen (42, 43) zu überlappen, wenn betrachtet von einer Richtung senkrecht zu der transparenten Abdeckung (12) in einem Fall, in dem die Lenk-Stange (4) mit einem Maximal-Winkel gedreht ist.

5. Ein Sattel-Reit-Typ-Fahrzeug gemäß Anspruch 4, wobei die transparente Abdeckung (12) konfiguriert ist, um zwischen dem Paar von Halte-Teilen (42, 43) in der Fahrzeug-Breiten-Richtung angeordnet zu sein, in dem Fall, in dem die Lenk-Stange (4) um den Maximal-Winkel gedreht ist.

6. Ein Sattel-Reit-Typ-Fahrzeug gemäß irgendeinem der Ansprüche 1 bis 5, wobei jede von dem Paar von oberen Flächen (93S, 93T) eine vordere geneigte Fläche (S1, T1) und eine hintere geneigte Fläche (S2, T2) hat, die vordere geneigte Fläche (S1, T1) ist geneigt nach vorne und unten, die hintere geneigte Fläche (S2, T2) ist geneigt nach hinten und unten, und ist kontinuierlich mit einem hinteren Endabschnitt der vorderen geneigten Fläche (S1, T1).

7. Ein Sattel-Reit-Typ-Fahrzeug gemäß Anspruch 6, wobei die hintere geneigte Fläche (S2, T2) quer zu der transparenten Abdeckung (12) in der Fahrzeug-Breiten-Richtung angeordnet ist.

8. Ein Sattel-Reit-Typ-Fahrzeug gemäß Anspruch 6 oder 7, wobei ein Neigungswinkel (θ1, θ3) der hinteren geneigten Fläche (S2, T2) mit Bezug auf eine Horizontal-Richtung (H2) kleiner ist als ein Neigungswinkel (θ2) der transparenten Abdeckung (12) mit Bezug auf die Horizontal-Richtung (H2).

9. Ein Sattel-Reit-Typ-Fahrzeug gemäß irgendeinem der Ansprüche 6 bis 8, wobei ein Intervall, erzeugt zwischen der transparenten Abdeckung (12) und der hinteren geneigten Fläche (S2, T2) in der Oben-und-Unten-Richtung sich graduell nach vorne vergrößert.

10. Ein Sattel-Reit-Typ-Fahrzeug gemäß irgendeinem der Ansprüche 6 bis 9, wobei ein Neigungswinkel (θ1, θ3) der hinteren geneigten Fläche (S2, T2) mit Bezug auf eine Horizontal-Richtung (H2) kleiner ist als ein Neigungswinkel (θ4, θ5) der vorderen geneigten Fläche (S1, T1) mit Bezug auf die Horizontal-Richtung (H2).

11. Ein Sattel-Reit-Typ-Fahrzeug gemäß irgendeinem der Ansprüche 1 bis 10, wobei eine Höhe der transparenten Abdeckung (12) in der Oben-und-Unten-Richtung größer ist als eine Tiefe der transparenten Abdeckung (12) in der Rück-und-Vorwärts-Richtung.

12. Ein Sattel-Reit-Typ-Fahrzeug gemäß irgendeinem der Ansprüche 1 bis 11, wobei das obere Ende der transparenten Abdeckung (12) hinter einer Mitte des Vorder-Seiten-Abdeckteils (91) in der Rück-und-Vorwärts-Richtung angeordnet ist.

13. Ein Sattel-Reit-Typ-Fahrzeug gemäß irgendeinem der Ansprüche 1 bis 12, wobei die Lenk-Stange (4) überlappend mit der Anzeigeeinheit (10) ist, wenn betrachtet von einer Richtung senkrecht zu der transparenten Abdeckung (12).

14. Ein Sattel-Reit-Typ-Fahrzeug gemäß Anspruch 13, wobei die Anzeigeeinheit (10) einen Anzeigeteil (11a) der konfiguriert ist, um eine Geschwindigkeitsanzeige anzuzeigen, und eine Alarmleuchte beinhaltet, und
die Lenk-Stange (4) von dem Anzeigeteil (11a) weg getrennt ist, wenn von der Richtung senkrecht zu der transparenten Abdeckung (12) betrachtet.

## Revendications

1. Véhicule à selle comprenant :
un tube frontal (21) ;
une fourche avant (3) comportant une colonne de direction (31), un pont inférieur (32) et un corps principal de fourche (33), la colonne de direction (31) étant supportée de manière rotative par le tube frontal (21), le pont inférieur (32) supportant une partie d'extrémité inférieure de la colonne de direction (31), une partie d'extrémité supérieure du corps principal de fourche (33) étant supportée par le pont inférieur (32);
un guidon (4) étant supporté par une partie d'extrémité supérieure de la colonne de direction (31), le guidon (4) comportant une paire de poignées (42, 43) ;
une roue avant (5) étant supportée par une partie d'extrémité inférieure du corps principal de fourche (33) ;
un siège (6) étant disposé en arrière du tube frontal (21) dans une direction avant-arrière ;
un marchepied (7) étant disposé en avant et en-dessous du siège (6) ;
un capot avant (9) comportant une partie de capot côté avant (91), une partie de capot côté arrière (92) et une partie de capot côté supérieur (93), la partie de capot côté avant (91) couvrant un côté avant et des côtés latéraux du tube frontal (21), la partie de capot côté arrière (92) couvrant un côté arrière du tube frontal (21) et s'étendant jusqu'à une partie d'extrémité arrière de la partie de capot côté avant (91), la partie de capot côté supérieur (93) couvrant un côté supérieur du tube frontal (21) et s'étendant jusqu'à une partie d'extrémité supérieure de la partie de capot côté avant (91) et une partie d'extrémité supérieure de la partie de capot côté arrière (92) ; et
une unité de compteur (10) comportant un compteur (11) et un capot transparent (12, le compteur (11) étant rattaché à la partie de capot côté supérieur (93), le capot transparent (12) couvrant un côté supérieur du compteur (11) et étant incliné vers l'avant, le guidon (4) étant rotatif par rapport à l'unité de compteur (10),
une extrémité arrière de la partie de capot côté avant (91) étant située en avant de la paire de poignées (42, 43) dans une vue latérale,
une extrémité avant du capot transparent (12) étant située plus haut que la paire de poignées (42, 43) dans la vue latérale,
une partie de capot côté supérieur (93) comprenant une paire de surfaces supérieures (93S, 93T), les surfaces supérieures (93S, 93T) s'étendant dans la direction avant-arrière des deux côtés de l'unité de compteur (10) dans une direction de la largeur du véhicule, et
la paire de surfaces supérieures (93S, 93T) étant située plus bas qu'un centre du capot transparent (12) dans une direction de haut en bas, **caractérisé en ce que** une largeur du capot transparent (12) dans la direction de la largeur du véhicule est inférieure à un tiers d'une largeur de la partie de capot côté supérieur (93) dans la direction de la largeur du véhicule.

2. Véhicule à selle selon la revendication 1, où un intervalle formé entre un bord extérieur du capot transparent (12) et un bord extérieur de la partie de capot côté supérieur (93) dans la direction de la largeur du véhicule est plus grand qu'une largeur du capot transparent (12) dans la direction de la largeur du véhicule dans une vue perpendiculaire au capot transparent (12), et
la largeur du capot transparent (12) dans la direction de la largeur du véhicule est plus grande qu'une longueur du capot transparent (12) dans la direction avant-arrière dans une vue perpendiculaire au capot transparent (12).

3. Véhicule à selle selon la revendication 1 ou 2, où une largeur du capot transparent (12) dans la direction de la largeur du véhicule est inférieure à une largeur de la fourche avant (3) dans la direction de la largeur du véhicule.

4. Véhicule à selle selon l'une quelconque des revendications 1 à 3, où le capot transparent (12) est configuré de manière à ne pas se superposer aux paires de poignées (42, 43) dans une vue perpendiculaire au capot transparent (12) dans un cas où le guidon (4) est tourné selon un angle maximal.

5. Véhicule à selle selon la revendication 4, où le capot transparent (12) est configuré pour être situé entre la paire de poignées (42, 43) dans la direction de la largeur du véhicule dans un cas où le guidon (4) est tourné selon un angle maximal.

6. Véhicule à selle selon l'une quelconque des revendications 1 à 5, où chacune des surfaces de la paire de surfaces supérieures (93S, 93T) présente une surface inclinée avant (S1, T1) et une surface inclinée arrière (S2, T2), la surface inclinée avant (S1, T1) étant inclinée vers l'avant et vers le bas, la surface inclinée arrière (S2, T2) étant inclinée vers l'arrière et vers le bas et s'étendant jusqu'à une partie d'extrémité arrière de la surface inclinée avant (S1, T1).

7. Véhicule à selle selon la revendication 6, où la surface inclinée avant (S2, T2) est située latéralement par rapport au capot transparent (12) dans la direction de la largeur du véhicule.

8. Véhicule à selle selon la revendication 6 ou 7, où un angle d'inclinaison (θ1, θ3) de la surface inclinée arrière (S2, T2) par rapport à une direction horizontale (H2) est inférieur à un angle d'inclinaison (θ2) du capot transparent (12) par rapport à la direction horizontale (H2).

9. Véhicule à selle selon l'une quelconque des revendications 6 à 8, où un intervalle formé entre un capot transparent (12) et la surface inclinée arrière (S2, T2) dans la direction de haut en bas augmente graduellement vers le haut.

10. Véhicule à selle selon l'une quelconque des revendications 6 à 9, où un angle d'inclinaison (θ1, θ3) de la surface inclinée arrière (S2, T2) par rapport à une direction horizontale (H2) est inférieur à un angle d'inclinaison (θ4, θ5) de la surface inclinée avant (S1, T1) par rapport à la direction horizontale (H2).

11. Véhicule à selle selon l'une quelconque des revendications 1 à 10, où une hauteur du capot transparent (12) dans la direction de haut en bas est supérieure à une profondeur du capot transparent (12) dans la direction avant-arrière.

12. Véhicule à selle selon l'une quelconque des revendications 1 à 11, où l'extrémité supérieure du capot transparent (12) est située en arrière d'un centre de la partie de capot côté avant (91) dans la direction avant-arrière.

13. Véhicule à selle selon l'une quelconque des revendications 1 à 12, où la poignée (4) est superposée à l'unité de compteur (10) dans une vue perpendiculaire au capot transparent (12).

14. Véhicule à selle selon la revendication 13, où l'unité de compteur (10) comporte une partie d'affichage (11a) qui est configurée pour afficher un compteur de vitesse et une lampe d'avertissement, et le guidon (4) est séparé de la partie d'affichage (11a) dans une vue perpendiculaire au capot transparent (12).
